(19) Europäisches Patentamt
European Patent Office
Office européen des brevets

(11) **EP 4 144 537 B1**

(12) **EUROPEAN PATENT SPECIFICATION**

(45) Date of publication and mention
of the grant of the patent:
**03.07.2024 Bulletin 2024/27**

(21) Application number: **22193018.3**

(22) Date of filing: **30.08.2022**

(51) International Patent Classification (IPC):
***B60C 7/14*** *(2006.01)*    ***B60C 9/00*** *(2006.01)*
***B60C 9/20*** *(2006.01)*    ***B60C 9/18*** *(2006.01)*

(52) Cooperative Patent Classification (CPC):
**B60C 7/146; B60C 9/0007; B60C 9/20;**
**B60C 9/2009;** B60C 2009/1871; B60C 2009/2016

(54) **NON-PNEUMATIC TIRE WITH IMPROVED SHEAR BAND**

LUFTLOSER REIFEN MIT VERBESSERTEM SCHERBAND

PNEU NON PNEUMATIQUE AVEC BANDE DE CISAILLEMENT AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2021 US 202163260815 P**
**24.08.2022 US 202217821892**

(43) Date of publication of application:
**08.03.2023 Bulletin 2023/10**

(73) Proprietor: **The Goodyear Tire & Rubber Company
Akron, OH 44316 (US)**

(72) Inventors:
• **MILLER, Andrew James
Berlin Center, 44401 (US)**
• **MYERS, Ann Elizabeth
Cuyahoga Falls, 44221 (US)**

(74) Representative: **Kutsch, Bernd
Goodyear S.A.
Patent Department
Avenue Gordon Smith
7750 Colmar-Berg (LU)**

(56) References cited:
**EP-A1- 3 323 635    EP-A1- 3 835 084
EP-A1- 3 835 086    WO-A1-2017/184237**

**Description**

Field of the Invention

The present invention relates generally to vehicle tires and non-pneumatic tires, and more particularly, to a shear band and non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed gasses. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of the shear band is to transfer the load from contact with the ground through tension in the spokes or connecting web to the hub, creating a top loading structure. When the shear band deforms, its preferred form of deformation is shear over bending. The shear mode of deformation occurs because of the inextensible membranes located on the outer portions of the shear band.

Prior art non-pneumatic tires typically have a shear band made from rubber materials sandwiched between at least two layers of inextensible belts or membranes. The disadvantage to this type of construction is that the rubber may not have sufficient shear rigidity to achieve the correct footprint geometry, which may adversely affect the ride and handling of the vehicle. In addition, the rolling resistance may also suffer due to the large amount of rubber. Thus, an improved shear band for a non-pneumatic tire is desired that has improved vehicle handling and rolling resistance.

EP 3 835 084 A1 and EP 3 323 635 A1 each describe a non-pneumatic tire in accordance with the preamble of claim 1.

Summary of the Invention

The invention relates to a non-pneumatic tire in accordance with claim 1.

Dependent claims refer to preferred embodiments of the invention.

Brief Description of the Drawings

The present invention will be better understood through reference to the following description and the appended drawings, in which:

FIG. 1 is a perspective view of a first embodiment of a non-pneumatic tire of the present invention;

FIG. 2A is a cross-sectional view of a first embodiment of a shear band of the present invention, and FIG. 2B is a close-up view of the shear band of FIG. 2A;

FIG. 3 is a cross-sectional view of the shear band of FIG. 2A,2B illustrating the reinforcement layers;

FIG. 4 is a cross-sectional view of a second embodiment of a shear band of the present invention;

FIG. 5 is a cross-sectional view of a third embodiment of a shear band of the present invention; and

FIG. 6 is a cross-sectional view of a fourth embodiment of a shear band of the present invention; and

FIG. 7A is a schematic of a hybrid or merged reinforcement chord formed of nylon and aramid filaments, and FIG. 7B is a cross-sectional view of the chord of Fig. 7A.

Definitions

The following terms are defined as follows for this description.
"Equatorial Plane" means a plane perpendicular to the axis of rotation of the tire passing through the centerline of the tire.
"Inextensible" means that a given layer has an extensional stiffness greater than 172 MPa.

Detailed Description of Preferred Embodiments of the Invention

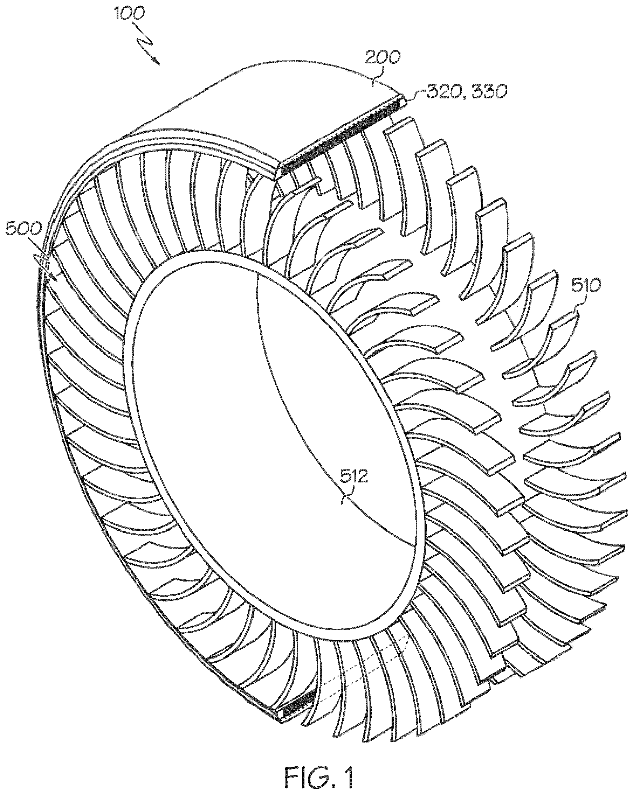

A first embodiment of a non-pneumatic tire 100 of the present invention is shown in FIG. 1. The non-pneumatic tire 100 includes a radially outer ground engaging tread 200, a shear band 300, and a connecting web 500. The tread 200 may include elements such as ribs, blocks, lugs, grooves and sipes as desired to improve the performance of the tire in various conditions. The connecting web 500 is mounted on hub 512 and may have different designs, as described in more detail, below. The non-pneumatic tire 100 is designed to be a top loading structure, so that the shear band 300 and the connecting web 500 efficiently carry the load. The connecting web 500 is designed to be a stiff structure when in tension that buckles or deforms in the tire footprint and does not compress or carry a compressive load. This allows the rest of the connecting web 500 not in the footprint area the ability to carry the load, resulting in a very load efficient structure. It is desired to allow the shear band 300 to bend to overcome road obstacles. The approximate load distribution is preferably such that approximately 90-100% of the load is carried by the shear band 300 and the upper portion of the connecting web 500, so that the lower portion of the connecting web 500 carries virtually zero of the load, or preferably less than 10%.

Shear Band

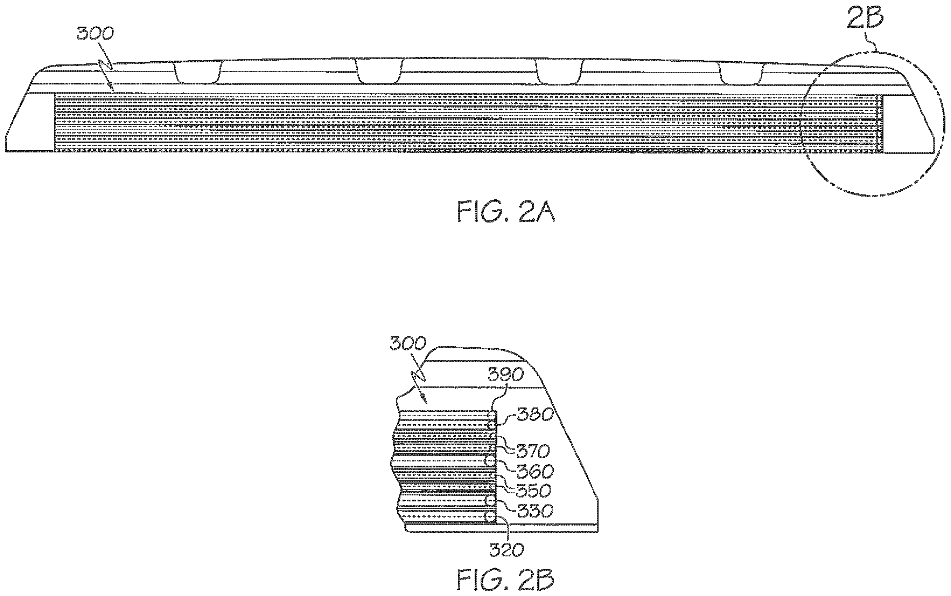

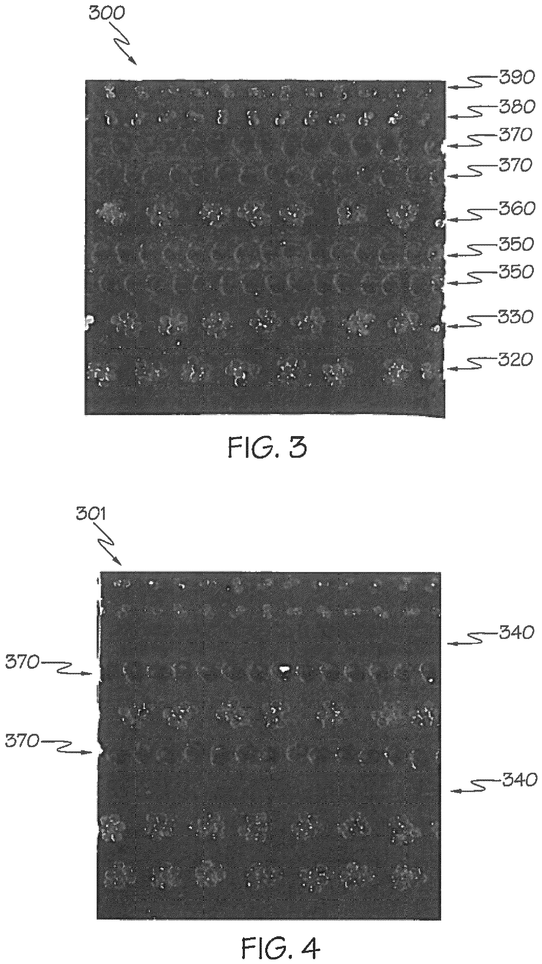

The shear band 300 is preferably an annular structure that is located radially inward of the tire tread 200 and functions to transfer the load from the bottom of the tire which is in contact with the ground to the spokes and to the hub, creating a top loading structure. The annular structure is called a shear band 300 because the preferred form of deformation is shear over bending.
A first embodiment of a shear band 300 is shown in FIGS. 2A, 2B and FIG. 3. The shear band 300 includes a first reinforcement layer or a first reinforcement layer group, an optional second reinforcement layer or second reinforcement layer group, and a third reinforcement layer or third reinforcement layer group third, each of which may have one or more individual reinforcement layers. In Figure 2B, the first layer group is shown as 320 and 330. The optional second reinforcement layer or layer group is shown as the single layer 360. The third layer group is shown as 380, 390. Each reinforcement layer is formed of a plurality of preferably closely spaced parallel reinforcement cords. The parallel reinforcement cords are preferably in the form of a calendared fabric so that the reinforcement cords are embedded in an elastomeric coating. Preferably, each reinforcement layer 320, 330, 360, 380, 390 is formed from spirally winding a single end cord. Preferably, the single end cord has multiple filaments.
The first reinforcement layer group 320, 330 are preferably the radially innermost reinforcement layers of the shear band 300, and the optional second reinforcement layer or layer group 360 is located radially outward of the first reinforcement layer group 320, 330. The third reinforcement layer group 380, 390 is located radially outward of the second reinforcement layer or layer group 360. The preferably inextensible reinforcement cords of each layer 320, 330, 360, 380, 390 are preferably angled at five degrees or less, i.e., from 5 degrees to 0 degrees, with respect to the tire equatorial plane. The suitable reinforcing cords are tire belt reinforcements, such as monofilaments or cords of steel, aramid, and/or other high modulus textiles. For example, the reinforcing cords may be steel cords of four wires, wherein the wires preferably have a diameter in the range of from 0.1 to 0.3 mm. In another example, the reinforcing cords may be steel cords of 6 wires, with five wires surrounding a central wire ((5 +1)-construction), wherein the wires preferably each have a diameter in the range of from 0.1 to 0.3 mm.
The third reinforcement layer 380, 390 is separated from the first or second reinforcement layer group 320, 330 by a first shear layer 350. If the optional second reinforcement layer exists, the shear band 300 preferably further comprises a second shear layer 370 located radially outward of the second reinforcement layer group 360. The first and second shear layer 350, 370 are formed of one or more layers of reinforced fabric, such as nylon or polyester PET fabric. The nylon or polyester fabric has a plurality of parallel reinforcement cords made of nylon or polyester. Alternatively, the first and second shear layer may be formed of monofilaments of nylon that are spirally wound to form one or more reinforcement layers. The reinforcement layers function to increase shear rigidity. The shear layer 350, 370 may also be formed of a rubberized strip of one or more reinforcement cords of nylon, aramid or polyester. Each shear layer 350, 370 has one or more reinforcement layers to achieve the desired shear rigidity. As shown in FIG. 3, each shear layer 350, 370 preferably has only minimal rubber.
FIG. 4 illustrates an alternate shear band 301, wherein the shear layer has a layer of rubber 340 and layer of reinforcement cords as described above.

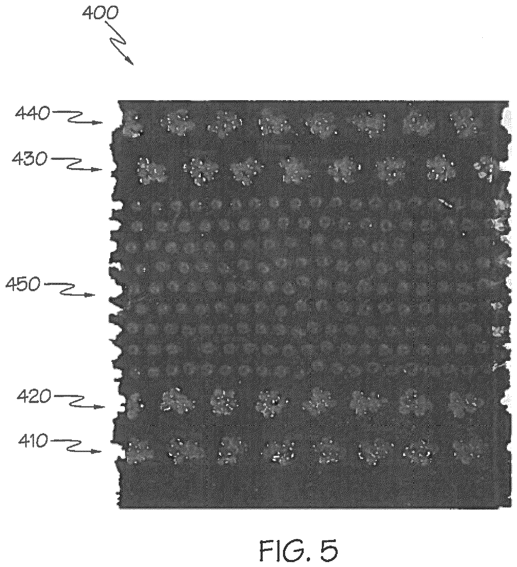

FIG. 5 illustrates a third embodiment of a shear band 400. The shear band 400 has a radially inner first reinforcement layer group 410, 420, but foregoes the optional second reinforcement layer group. The shear band 400 further includes a radially outer third reinforcement layer group 430, 440. The third reinforcement layer 430 is spaced apart from the first reinforcement layer group 410, 420 by a shear layer 450. The reinforcement layers 410, 420, 430, 440 are preferably steel reinforcements that are preferably single end cords that are spirally wound so that the reinforcement cords align circumferentially. Preferably, they make an angle of from 5 degrees to 0 degrees with respect to the tire equatorial plane. The reinforcement layers 410, 420, 430, 440 may also be fabric with parallel reinforcement cords of steel or nylon or polyester. The reinforcement layers are for creating high bending stiffness using high modulus reinforcement cords. The shear layer 450 is formed of a plurality of reinforcements, preferably nylon. The reinforcements are preferably in the form of fabric with parallel aligned reinforcement cords, such as polyester fabric or nylon fabric. The reinforcements may also be formed from single end cords such as monofilament nylon that are spirally wound. The first, second, third and fourth reinforcement layers 410, 420, 450, 430, 440 may also comprised a tape formed of one or more reinforcement cords, wherein the tape is spirally wound to form the layers comprising the reinforcement cords.

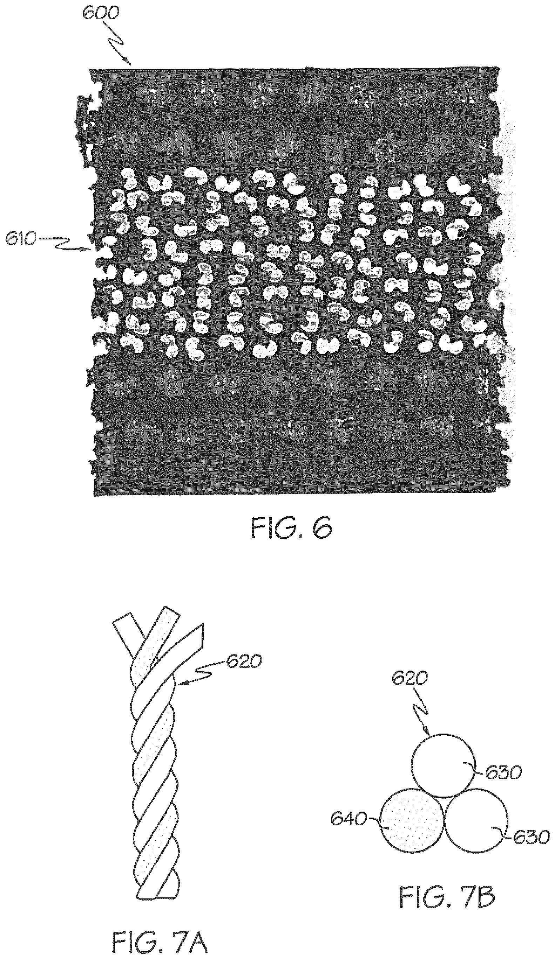

FIG. 6 illustrates a fourth embodiment of a shear band 600. The shear band 600 is the same as the shear band 400 described above, except for the following differences. The shear band 600 has a shear layer 610 formed of a plurality of reinforcement cords, wherein each reinforcement cord is a merged or hybrid cord 620 preferably as shown in FIGS. 7a, 7b. The merged cord 620 is preferably formed of three filaments, wherein the filaments are preferably nylon 630 and aramid 640 twisted together. The shear band 600 may have one or more layers of merged cord 620.

The shear modulus is defined using a pure shear deformation test, recording the stress and strain, and determining the slope of the resulting stress-strain curve.

The shear bands 300, 400, 600 may optionally include a first angled belt 380 and a second angled belt 390. The first angled belt 380 is located radially outward of the second shear layer 370, and the second angled belt 390 is located radially outward of the first angled belt 380. The first and second angled belts 380, 390 are preferably the radially outermost reinforcement layers. The first and second angled belts 380, 390 each have parallel reinforcement cords that are embedded in an elastomeric coating. The parallel reinforcement cords are preferably angled in the range of from 15 to 30 degrees with respect to the tire equatorial plane. Preferably, the angle of the parallel reinforcement cords is in the range of from 20 to 25 degrees. Preferably, the angle of the reinforcement cords of the first angled belt is in the opposite direction of the angle of the reinforcement cords in the second angled belt. It is additionally preferred that the reinforcement cords are inextensible.

Shear Band Properties

The shear band 300, 400, 600 has an overall shear stiffness GA or rigidity. The shear stiffness GA may be determined by measuring the deflection on a representative test specimen taken from the shear band. The upper surface of the test specimen is subjected to a lateral shear force F. The test specimen is a representative sample taken from the shear band and having the same radial thickness as the shear band. The shear stiffness GA is then calculated from the following equation:

$$GA = F*L/\Delta X,\ \text{where F is the shear load, L is the shear layer thickness, and delta X is the shear}$$

where F is the shear load, L is the shear layer thickness, and delta X is the shear deflection. GA is in the range of from 15,000 N to 35,000N, and more preferably about 25,000N.

The shear band 300, 400, 600 has an overall bending stiffness EI. The bending stiffness EI may be determined from beam mechanics using the three-point bending test. It represents the case of a beam resting on two roller supports and subjected to a concentrated load applied in the middle of the beam. The bending stiffness EI is determined from the following equation: $EI = PL3/48*\Delta X$, where P is the load, L is the beam length, and $\Delta X$ is the deflection. It is preferred that EI be about equal to $220\ E6\ N\text{-}mm^2$.

It is desirable to maximize the bending stiffness of the shear band EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shear band is acceptable in the range of 1000 to 3000, and more preferably in the range of 1500-3000.

Connecting Web

The non-pneumatic tire 100 further includes a connecting web 500 as shown in FIG. 1. The connecting web preferably comprises a plurality of circumferentially aligned spokes 510 that extend from an inner radius to an outer radius. The spokes 510 are preferably oriented in the radial direction. The spokes 510 may be curved or straight. Preferably, the non-pneumatic tire 100 comprises two sets of circumferentially aligned spokes 510. The spokes 510 may have different cross-sectional designs. The spokes 510 function to carry the load transmitted from the shear layer. The spokes are primarily loaded in tension and shear and carry no load in compression. Each spoke 510 as described herein preferably has an axial thickness A that is substantially less than the axial thickness AW of the non-pneumatic tire 100. The axial thickness A is preferably in the range of from 5 to 50% AW, more preferably 5-20% of AW or 5-10% of AW.

The spokes 510 are preferably formed of an elastic material such as rubber or a thermoplastic elastomer. The spokes 510 are designed such that the spokes 510 have a low resistance to radial deformation and a higher resistance to the lateral deformation of the tire 100.

## Claims

1. A non-pneumatic tire comprising an outer annular tread band (200), and a plurality of connecting structures (500) connecting the tread band (200) to a hub (512), wherein said outer annular tread band (200) comprises a shear band (300, 400, 600) comprising or formed of at least one first reinforcement layer (320, 330, 410, 420) located radially inward of the outer annular tread band (200) and at least one a second reinforcement layer (360, 430, 440) located radially outward of the at least one first reinforcement layer (320, 330, 410, 420), wherein the one or more first and second reinforcement layers (320, 330, 410, 420, 360, 430, 440) each comprise a plurality of parallel reinforcement cords, wherein the at least one first reinforcement layer (320, 330, 410, 420) is separated from the at least one second reinforcement layer (360, 430, 440) by a first shear layer (350, 450, 610), and wherein the first shear layer (350, 450, 610) is reinforced with reinforcements, **characterized in that** the shear band (300, 400, 600) has an overall shear stiffness (GA) in the range of from 15000 N to 35000 N, wherein the shear stiffness GA is determined by measuring the deflection on a representative test specimen taken from the shear band, the upper surface of the test specimen is subjected to a lateral shear force F, wherein the test specimen is a representative sample taken from the shear band and having the same radial thickness as the shear band and wherein the shear stiffness GA is then calculated from the following equation: $GA = F*L/\Delta X$, where F is the shear load, L is the shear layer thickness, and $\Delta X$ is the shear deflection.

2. The non-pneumatic tire of claim 1 wherein the reinforcement cords of the one or more first and second reinforcement layers (320, 330, 410, 420, 360, 430, 440) are arranged at an angle of 5 degrees or less with respect to the equatorial plane of the non-pneumatic tire (100).

3. The non-pneumatic tire of claim 1 or 2 wherein the first shear layer (350, 450, 610) does not have a layer of rubber having a thickness in the range of from 1 to 10 mm or in the range of from 1 to 5 mm.

4. The non-pneumatic tire of at least one of the previous claims wherein the first shear layer (350, 450, 610) is reinforced with one or more layers of nylon fabric or cord, one or more layers of polyester fabric or cord, one or more layers of nylon monofilament, or with one or more layers of a hybrid or merged cord, preferably a merged cord of nylon and aramid.

5. The non-pneumatic tire of at least one of the previous claims wherein the first shear layer (350, 450, 610) comprises a layer of rubber.

6. The non-pneumatic tire of at least one of the previous claims wherein said outer annular tread band (200) further comprises a first belt layer (380) located radially outward of the at least one a second reinforcement layer (360, 430, 440), and a second belt layer (390) located radially outward of the first angled belt (380), wherein the first and second belt layers (380, 390) each have parallel reinforcement cords making an angle in the range of from 15 to 30 degrees with respect to the equatorial plane of the non-pneumatic tire (100), and wherein the angle of the second belt layer (390) preferably makes an angle equal to but in the opposite direction of the angle of the first belt layer (380).

7. The non-pneumatic tire of at least one of the previous claims wherein the one or more first and second reinforcement layers (320, 330, 410, 420, 360, 430, 440) comprise reinforcement cords arranged at an angle of zero degrees with respect to the equatorial plane of the non-pneumatic tire (100).

8. The non-pneumatic tire of at least one of the previous claims further including a further reinforcement layer comprising reinforcement cords arranged at an angle of zero degrees with respect to the tire equatorial plane.

9. The non-pneumatic tire of at least one of the previous claims further including a second reinforced shear layer (370) located radially outward of the one or more second reinforcement layer (360, 430, 440).

10. The non-pneumatic tire of at least one of the previous claims wherein the parallel reinforcement cords are made of steel.

11. The non-pneumatic tire of at least one of the previous claims wherein the first shear layer (350, 450, 610) is formed from a plurality of layers of nylon fabric or polyester fabric.

12. The non-pneumatic tire of at least one of the previous claims wherein the first shear layer (350, 450, 610) is formed from at least two layers of nylon monofilament.

**Patentansprüche**

1. Nicht-pneumatischer Reifen, umfassend ein äußeres ringförmiges Laufflächenband (200) und eine Vielzahl von Verbindungsstrukturen (500), die das Laufflächenband (200) mit einer Nabe (512) verbinden, wobei das äußere ringförmige Laufflächenband (200) ein Scherband (300, 400, 600) umfasst, das mindestens eine erste Verstärkungslage (320, 330, 410, 420), die radial innerhalb des äußeren ringförmigen Laufflächenbandes (200) angeordnet ist, und mindestens eine zweite Verstärkungslage (360, 430, 440), die radial außerhalb der mindestens einen ersten Verstärkungslage (320, 330, 410, 420) angeordnet ist, umfasst oder aus der oben genannten mindestens einen ersten und der oben genannten mindestens einen zweiten Verstärkungslage gebildet wird, wobei die eine oder mehreren ersten und zweiten Verstärkungslagen (320, 330, 410, 420, 360, 430, 440) jeweils eine Vielzahl von parallelen Verstärkungskorden umfassen, wobei die mindestens eine erste Verstärkungslage (320, 330, 410, 420) von der mindestens einen zweiten Verstärkungslage (360, 430, 440) durch eine erste Scherlage (350, 450, 610) getrennt ist, und wobei die erste Scherlage (350, 450, 610) mit Verstärkungen verstärkt ist, **dadurch gekennzeichnet, dass** das Scherband (300, 400, 600) eine allgemeine Schersteifigkeit (GA) im Bereich von 15000 N bis 35000 N aufweist, wobei die Schersteifigkeit GA durch das Messen der Durchbiegung an einer repräsentativen, aus dem Scherband entnommenen Testprobe bestimmt wird, wobei die obere Fläche der Testprobe einer seitlichen Scherkraft F ausgesetzt wird, wobei die Testprobe eine repräsentative, aus dem Scherband entnommene Probe ist, die die gleiche radiale Dicke wie das Scherband aufweist, und wobei die Schersteifigkeit GA dann anhand der folgenden Gleichung berechnet wird: $GA = F*L/\Delta X$, wobei F die Scherkraft, L die Scherlagedicke und $\Delta X$ die Scherdurchbiegung ist.

2. Nicht-pneumatischer Reifen nach Anspruch 1, wobei die Verstärkungskorde der einen oder mehreren ersten und zweiten Verstärkungslagen (320, 330, 410, 420, 360, 430, 440) unter einem Winkel von 5 Grad oder weniger in Bezug auf die Äquatorialebene des nicht-pneumatischen Reifens (100) angeordnet sind.

3. Nicht-pneumatischer Reifen nach Anspruch 1 oder 2, wobei die erste Scherlage (350, 450, 610) keine Gummilage aufweist, die eine Dicke im Bereich von 1 bis 10 mm oder im Bereich von 1 bis 5 mm hat.

4. Nicht-pneumatische Reifen nach mindestens einem der vorhergehenden Ansprüche, wobei die erste Scherlage (350, 450, 610) mit einer oder mehreren Lagen aus Nylongewebe oder -cord, einer oder mehreren Lagen aus Polyestergewebe oder -cord, einer oder mehreren Lagen aus Nylonmonofilament oder mit einer oder mehreren Lagen aus einem hybriden oder gemischten Cord, vorzugsweise einem gemischten Cord aus Nylon und Aramid, verstärkt ist.

5. Nicht-pneumatische Reifen nach mindestens einem der vorhergehenden Ansprüche, wobei die erste Scherlage (350, 450, 610) eine Lage aus Gummi umfasst.

6. Nicht-pneumatischer Reifen nach mindestens einem der vorhergehenden Ansprüche, wobei das äußere ringförmige Laufflächenband (200) ferner eine erste Gürtellage (380), die radial außerhalb der mindestens einen zweiten Verstärkungslage (360, 430, 440) angeordnet ist, und eine zweite Gürtellage (390), die radial außerhalb des ersten abgewinkelten Gürtels (380) angeordnet ist, umfasst, wobei die erste und die zweite Gürtellage (380, 390) jeweils parallele Verstärkungskorde aufweisen, die einen Winkel im Bereich von 15 bis 30 Grad in Bezug auf die Äquatorialebene des nicht-pneumatischen Reifens (100) bilden, und wobei der Winkel der zweiten Gürtellage (390) vorzugsweise einen Winkel bildet, der gleich dem Winkel der ersten Gürtellage (380) ist, sich jedoch in der entgegengesetzten Richtung erstreckt.

**7.** Nicht-pneumatischer Reifen nach mindestens einem der vorhergehenden Ansprüche, wobei die eine oder mehreren ersten und zweiten Verstärkungslagen (320, 330, 410, 420, 360, 430, 440) Verstärkungskorde umfassen, die unter einem Winkel von null Grad in Bezug auf die Äquatorialebene des nicht-pneumatischen Reifens (100) angeordnet sind.

**8.** Nicht-pneumatischer Reifen nach mindestens einem der vorhergehenden Ansprüche, der außerdem eine weitere Verstärkungslage enthält, die Verstärkungskorde umfasst, die unter einem Winkel von null Grad in Bezug auf die Äquatorialebene des Reifens angeordnet sind.

**9.** Nicht-pneumatischer Reifen nach mindestens einem der vorhergehenden Ansprüche, der außerdem eine zweite verstärkte Scherlage (370) enthält, die radial außerhalb der einen oder mehreren zweiten Verstärkungslagen (360, 430, 440) angeordnet ist.

**10.** Nicht-pneumatischer Reifen nach mindestens einem der vorhergehenden Ansprüche, wobei die parallelen Verstärkungskorde aus Stahl hergestellt sind.

**11.** Nicht-pneumatischer Reifen nach mindestens einem der vorhergehenden Ansprüche, wobei die erste Scherlage (350, 450, 610) aus einer Vielzahl von Lagen aus Nylongewebe oder Polyestergewebe gebildet ist.

**12.** Nicht-pneumatischer Reifen nach mindestens einem der vorhergehenden Ansprüche, wobei die erste Scherlage (350, 450, 610) aus mindestens zwei Lagen eines Nylon-Monofilaments gebildet ist.


**Revendications**

**1.** Bandage non pneumatique qui comprend une bande annulaire externe (200) de la bande de roulement, et un certain nombre de structures de liaison (500) qui relient la bande (200) de la bande de roulement à un moyeu (512) ; dans lequel ladite bande annulaire externe (200) de la bande de roulement comprend une bande de cisaillement (300, 400, 600) qui comprend au moins une première couche de renforcement (320, 330, 410, 420) disposée à l'intérieur, dans la direction radiale, de la bande annulaire externe (200) de la bande de roulement et au moins une deuxième couche de renforcement (360, 430, 440) disposée à l'extérieur, dans la direction radiale, de ladite au moins une première couche de renforcement (320, 330, 410, 420), ou qui est réalisée à partir de ladite au moins une première couche et de ladite au moins une deuxième couche ; dans lequel lesdites une ou plusieurs premières et deuxièmes couches de renforcement (320, 330, 410, 420, 360, 430, 440) comprennent chacune un certain nombre de câblés de renforcement parallèles ; dans lequel ladite au moins une première couche de renforcement (320, 330, 410, 420) est séparée de ladite au moins une deuxième couche de renforcement (360, 430, 440) par une première couche de cisaillement (350, 450, 610) ; et dans lequel la première couche de cisaillement (350, 450, 610) est renforcée avec des renforcements ; **caractérisé en ce que** la bande de cisaillement (300, 400, 600) possède une rigidité globale au cisaillement (GA) qui se situe dans la plage de 15.000 à 35.000 ; dans lequel la rigidité au cisaillement (GA) est déterminée par la mesure de la flexion due au cisaillement sur une éprouvette représentative qui a été prélevée à partir de la bande de cisaillement, la surface supérieure de l'éprouvette étant soumise à une force de cisaillement latérale F ; dans lequel l'éprouvette est un échantillon représentatif qui a été prélevé à partir de la bande de cisaillement et qui possède la même épaisseur radiale que celle de la bande de cisaillement ; et dans lequel la rigidité au cisaillement GA est ensuite calculée en se basant sur l'équation suivante : $GA = F*L/\Delta X$, dans laquelle F représente la charge de cisaillement, L représente l'épaisseur de la couche de cisaillement et $\Delta X$ représente la flexion due au cisaillement.

**2.** Bandage non pneumatique selon la revendication 1, dans lequel les câblés de renforcement desdites une ou plusieurs premières et deuxièmes couches de renforcement (320, 330, 410, 420, 360, 430, 440) sont disposés en formant un angle de 5 degrés ou moins par rapport au plan équatorial du bandage non pneumatique (100).

**3.** Bandage non pneumatique selon la revendication 1 ou 2, dans lequel la première couche de cisaillement (350, 450, 610) ne possède pas une couche de caoutchouc dont l'épaisseur se situe dans la plage allant de 1 à 10 mm ou dans la plage allant de 1 à 5 mm.

**4.** Bandage non pneumatique selon au moins une des revendications précédentes, dans lequel la première couche de cisaillement (350, 450, 610) est renforcée avec une ou plusieurs couches d'un câblé ou d'un tissu à base de nylon, une ou plusieurs couches d'un câblé ou d'un tissu à base de polyester, une ou plusieurs couches de monofilament à base de nylon, ou avec une ou plusieurs couches d'un câblé hybride ou obtenu par fusion, de préférence un câblé de nylon et d'aramide obtenu par fusion.

5. Bandage non pneumatique selon au moins une des revendications précédentes, dans lequel la première couche de cisaillement (350, 450, 610) comprend une couche de caoutchouc.

6. Bandage non pneumatique selon au moins une des revendications précédentes, dans lequel ladite bande annulaire externe (200) de la bande de roulement comprend en outre une première couche de ceinture (380) qui est disposée, dans la direction radiale, à l'extérieur de ladite au moins une deuxième couche de renforcement (360, 430, 440), et une deuxième couche de ceinture (390) qui est disposée, dans la direction radiale, à l'extérieur de la première ceinture angulaire (380), dans lequel la première et la deuxième couche de ceinture possèdent chacune des câblés de renforcement parallèles qui forment un angle qui se situe dans la plage allant de 15 à 30 degrés par rapport au plan équatorial du bandage non pneumatique (100), et dans lequel l'angle formé par la deuxième couche de ceinture (90) représente de préférence un angle égal à l'angle formé par la première couche de ceinture (380), mais dont la direction est opposée à celle de l'angle formé par cette dernière.

7. Bandage non pneumatique selon au moins une des revendications précédentes, dans lequel lesdites une ou plusieurs premières et deuxièmes couches de renforcement (320, 330, 410, 420, 360, 430, 440) comprennent des câblés de renforcement qui sont disposés en formant un angle s'élevant à zéro degré par rapport au plan équatorial du bandage non pneumatique (100).

8. Bandage non pneumatique selon au moins une des revendications précédentes, qui englobe en outre une couche de renforcement supplémentaire qui comprend des câblés de renforcement qui sont disposés en formant un angle s'élevant à zéro degré par rapport au plan équatorial du bandage non pneumatique (100).

9. Bandage non pneumatique selon au moins une des revendications précédentes, qui englobe en outre une deuxième couche de cisaillement renforcée (370) qui est disposée, dans la direction radiale, à l'extérieur desdites une ou plusieurs deuxièmes couches de renforcement (360, 430, 440).

10. Bandage non pneumatique selon au moins une des revendications précédentes, dans lequel les câblés de renforcement parallèles sont réalisés en acier.

11. Bandage non pneumatique selon au moins une des revendications précédentes, dans lequel la première couche de cisaillement (350, 450, 610) est réalisée à partir d'un certain nombre de couches d'un tissu à base de nylon ou d'un tissu à base de polyester.

12. Bandage non pneumatique selon au moins une des revendications précédentes, dans lequel la première couche de cisaillement (350, 450, 610) est réalisée à partir d'au moins deux couches constituées d'un monofilament en nylon.

FIG. 1

FIG. 2A

FIG. 2B

EP 4 144 537 B1

FIG. 3

FIG. 4

FIG. 5

EP 4 144 537 B1

FIG. 6

FIG. 7A

FIG. 7B

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3835084 A1

- EP 3323635 A1